# EUROPÄISCHE PATENTSCHRIFT

(11) **EP 2 567 255 B1**
(45) Veröffentlichungstag und Bekanntmachung des Hinweises auf die Patenterteilung: **09.03.2016**
(21) Anmeldenummer: 11708205.7
(22) Anmeldetag: 12.03.2011
(51) Int. Cl.: G01S 13/89, G01V 8/00, H01Q 3/08, H01Q 21/00, G01S 13/88

(54) **VORRICHTUNG ZUR ÜBERPRÜFUNG EINES OBJEKTES, INSBESONDERE ZUR KONTROLLE VON PERSONEN AUF VERDÄCHTIGE GEGENSTÄNDE**
DEVICE FOR EXAMINING AN OBJECT, IN PARTICULAR FOR INSPECTING PERSONS FOR SUSPICIOUS ITEMS
DISPOSITIF D'INSPECTION D'UN OBJET, EN PARTICULIER DE CONTRÔLE DE PERSONNES SUSCEPTIBLES DE PORTER DES OBJETS SUSPECTS

(30) Priorität: 07.05.2010 DE 102010019880
(43) Veröffentlichungstag der Anmeldung: 13.03.2013
(73) Patentinhaber: Smiths Heimann GmbH, 65205 Wiesbaden (DE)
(72) Erfinder: JECK, Michael, 55122 Mainz (DE)
(74) Vertreter: Greif, Thomas
(86) Internationale Anmeldenummer: PCT/EP2011/001227
(87) Internationale Veröffentlichungsnummer: WO 2011/137945

(56) Entgegenhaltungen:
- WO-A1-2009/073009
- US-A- 3 713 156
- US-A- 5 455 590
- US-A1- 2004 080 448
- US-A1- 2004 149 909
- US-A1- 2007 222 854

## Beschreibung

Die Erfindung betrifft eine Vorrichtung zur Überprüfung von Objekten, insbesondere zur Kontrolle einer Person auf verdächtige Gegenstände, mit einem Scansystem zum Abtasten des Objekts mit Wellen und einem Auswertesystem (6).

Zur Kontrolle von Personen wie Flugpassagieren auf verdächtige Gegenstände sind berührungslos arbeitende Überwachungssysteme bekannt, bei denen die Personen mit Wellen abgescannt werden, um verdächtige Gegenstände zu detektieren. So ist in der WO 2006/105977 A1 ein System beschrieben, bei dem die zu überprüfende Person auf einer Plattform steht, während sie von einem senkrechten Antennenarray entlang ihres Umfangs sukzessive mit Millimeterwellen beleuchtet und abgetastet wird.

Da in einem bei der Überprüfung mit Millimeterwellen erzeugten Bild künstliche Elemente wie Prothesen sichtbar sind, schlägt die WO 2005/086620 A2 zum Schutz der Intimsphäre vor, mit Hilfe einer zusätzlichen Kamera ein zusätzliches optisches Bild der Person aufzunehmen. Werden verdächtige Bereiche in dem Millimeterwellen-Bild detektiert, so wird eine Markierung (Rahmen, Spot etc.) dem optischen Bild überlagert. Nachteilig bei diesem Verfahren ist der Aufwand zur Erstellung eines zusätzlichen Bildes durch eine zusätzliche Kamera. Zusätzlich können Probleme entstehen, die beiden Bilder zum Überlappen zu bringen, da sie nicht exakt aus dem gleichen Winkel aufgenommen werden können. Auch können Probleme mit Persönlichkeitsrechten durch Aufnahme eines zusätzlichen Bildes auftreten.

US 3713156 offenbart auch eine Vorrichtung zur Personenkontrolle.

Der Erfindung liegt daher die Aufgabe zugrunde, eine Vorrichtung zur Überprüfung von Objekten, insbesondere zur Kontrolle von Personen auf verdächtige Gegenstände bereitzustellen, bei dem die Intimsphäre der zu kontrollierenden Person geschützt wird, ohne dass der Aufwand für zusätzliche Bilder erbracht werden muss.

Diese Aufgabe wird nach der Erfindung dadurch gelöst, dass ein optisches Markierungssystem vorhanden ist, das die Position eines als verdächtig eingestuften Gegenstands mittels sichtbarem Licht an dem Objekt selbst oder in einem Spiegelbild des Objekts anzeigt.

Dabei enthält die Anzeige der Position an dem Objekt selbst zum einen die Variante, dass eine Anzeige auf dem Objekt selbst erfolgt, beispielsweise durch Aufprojizieren einer Markierung auf eine zu kontrollierende Person. Zum anderen ist es möglich, eine Markierung neben dem Objekt an der entsprechenden Position anzuzeigen. Dies kann beispielsweise durch Aktivierung einer Leuchtdiode aus einer senkrechten Reihe von Leuchtdioden in der entsprechenden Höhe erfolgen, wobei die zu kontrollierende Person so nahe neben den Leuchtdioden steht, dass ein Kontrolleur die entsprechende Höhenposition auf die Person übertragen kann.

Bevorzugt enthält das Scansystem eine Vielzahl von zu einem Array angeordneten Antennen, und das Antennenarray ist von einer Abdeckung abgedeckt. Die Abdeckung ist für die verwendeten Wellen durchlässig und reflektiert zur Erzeugung eines Spiegelbilds des zu prüfenden Objekts sichtbares Licht zumindest teilweise. Ein optisches Markierungssystem zeigt die Position eines als verdächtig eingestuften Gegenstands in dem auf der Abdeckung erzeugten Spiegelbild des Objekts mittels sichtbarem Licht an.

Die sichtbares Licht zumindest teilweise reflektierende Abdeckung bietet sowohl eine Vielzahl von Möglichkeiten, die Position eines als verdächtig eingestuften Gegenstandes in dem Spiegelbild des Objekts mittels sichtbarem Licht anzuzeigen, als auch die Möglichkeit, Markierungsstrahlen auf das Objekt selbst zu reflektieren.

So ist es möglich, eine Lichtmarkierung auf die Abdeckung zu projizieren, beispielsweise mittels eines Beamers.

Ebenso ist es möglich, eine Markierung auf die entsprechende Stelle des zu überprüfenden Objekts zu projizieren, die dann auf dem Objekt selbst oder im Spiegelbild des Objekts beobachtet werden kann.

Die Markierung lässt sich auf der Abdeckung durch eine Reihe von Lichtquellen erzeugen, die an zumindest zwei Rändern des Arrays angeordnet und einzeln ansteuerbar sind. Die Position des verdächtigen Gegenstands lässt sich dann als Kreuzungspunkt zwischen zumindest zwei Lichtstrahlen anzeigen, die von eingeschalteten Lichtquellen erzeugt werden.

Eine weitere vorteilhafte Ausführungsform besteht darin, dass im Array zwischen den Antennen eine Vielzahl von einzeln ansteuerbaren Lichtquellen angeordnet sind, deren Licht durch die teilweise durchlässige Abdeckung tritt und so im Spiegelbild die Position eines verdächtigen Gegenstandes markiert. Bei dieser Ausführungsform ist das vom Kontrolleur beobachtete Bild unabhängig von seiner Position. Es sind somit keine diesbezüglichen Korrekturen erforderlich.

Bevorzugt verwendet das Scansystem zum Abtasten eines Objekts elektromagnetische Millimeterwellen. Bei dieser Ausführungsform ist das Scansystem bevorzugt ein Phased Array-Radarsystem mit Sende- und Empfangsantennen sowie mit Reflexionsantennen, die in einem Array angeordnet sind. Alternativ ist auch ein Scansystem mit Millimeterwellen verwendbar, bei dem Sende- und Empfangsantennen in einem Array angeordnet sind, wobei die empfangenen Millimeterwellen nach dem SAR-, dem Pulsradar- oder dem FMCW-Radar-Prinzip ausgewertet werden. Dann enthält das Array aus Sende- und Empfangsantennen eine Abdeckung und ein Markiersystem nach der Erfindung.

Als weitere Alternative ist auch der Einsatz eines Scansystems möglich, bei dem zum Abtasten eines Objekts Röntgenstrahlen verwendet werden und beispielsweise vom Objekt gestreute Röntgenstrahlen ausgewertet werden. Ebenso ist der Einsatz eines Scansystems möglich, das mit Ultraschallwellen die Objekte abtastet.

Beim Abtasten mit Millimeterwellen besteht die Abdeckung des Antennenarrays beispielsweise aus einer extrem dünnen, sichtbares Licht reflektierenden metallischen Schicht, durch die Millimeterwellen dringen können, oder aus einem sichtbares Licht teilweise reflektierenden Material wie einer Plexiglasplatte mit dunklem Hintergrund, die ebenfalls für Millimeterwellen durchlässig ist.

Nachfolgend wird die Erfindung anhand verschiedener Ausführungsbeispiele näher erläutert.

Es zeigen:
- Figur 1: eine Vorrichtung nach der Erfindung in perspektivischer Darstellung,
- Figur 2 und 3: in Frontal- und Seitenansicht das Antennenarray mit dem optischen Markierungssystem,
- Figur 4: zeigt in Schrägansicht eine Vorrichtung mit einem Spot zum Markieren,
- Figur 5 und 6: zeigen in Frontal- und Seitenansicht eine Vorrichtung, bei dem eine Markierung auf das zu überprüfende Objekt projiziert wird,
- Figur 7 und 8: zeigen in Frontal- und Seitenansicht eine Vorrichtung, mit einem Markierungssystem, bei dem einzeln ansteuerbare Lichtquellen Lichtstrahlen erzeugen,
- Figur 9: zeigt eine Schrägansicht der Vorrichtung nach den Figuren 7 und 8.

Bei den nachfolgend beschriebenen und in den Figuren dargestellten Ausführungsbeispielen wird als bevorzugtes Scansystem ein sogenanntes Phased Array-Radarsystem verwendet. Dieses System weist Sende- und Empfangsantennen 1 auf, die in einer senkrechten Reihe angeordnet sind und Millimeterwellen aussenden und empfangen. Die ausgesandten Millimeterwellen werden von einer Vielzahl von zum einem Array 2 angeordneten Reflexionsantennen 3 im Raum gebündelt. Damit wird das Prüfobjekt, im Beispiel ein aufrecht stehender Passagier 4, beleuchtet. Die vom Prüfobjekt (Passagier 4) reflektierten Millimeterwellen werden von den Empfangsantennen 1 aufgenommen und von einem Auswertesystem ausgewertet.

Anstelle eines Phased Array-Radarsystems mit Reflexionsantennen 3 kann auch ein Scansystem verwendet werden, bei dem die Sende- und Empfangsantennen für Millimeterwellen in einem Array angeordnet sind und die empfangenen Millimeterwellen nach einem anderen System ausgewertet werden.

Alternativ können auch Scansysteme eingesetzt werden, bei denen die Objekte mit anderen Wellen abgetastet werden, beispielweise mit Röntgenstrahlen oder mit Ultraschallwellen.

Das Antennenarray 2 (im Ausführungsbeispiel bestehend aus Reflexionsantennen 3) ist bevorzugt senkrecht stehend angeordnet. Es ist von einer plattenförmigen Abdeckung 5 abgedeckt, die für Millimeterwellen durchlässig ist und zugleich zur Erzeugung eines Spiegelbilds des Objekts 4 (im Beispiel des Passagiers) sichtbares Licht zumindest teilweise reflektiert.

Falls eine Totalreflexion von sichtbarem Licht gewünscht wird, so besteht die Abdeckung 5 bevorzugt aus einer extrem dünnen, sichtbares Licht reflektierenden metallischen Schicht, durch die Millimeterwellen dringen können. Falls eine Teilreflexion von sichtbarem Licht gewünscht wird, so besteht die Abdeckung 5 bevorzugt aus einer sichtbares Licht durchlässigen Platte, insbesondere einer Plexiglasplatte, mit einem dunklen Hintergrund, die ebenfalls für Millimeterwellen durchlässig ist.

Weiterhin enthält die Vorrichtung ein Auswertesystem 6, das aus den empfangenen Millimeterwellen Bilddaten erzeugt, die dazu dienen, verdächtige Bereiche zu detektieren. Die Ermittlung eines verdächtigen Bereichs im Prüfobjekt kann entweder mittels eines hinterlegten Algorithmus erfolgen, der beispielsweise bei Passagieren 4 entscheidet, ob künstliche oder natürlich menschliche Stoffe vorliegen. Oder es wird eine bildhafte Darstellung erzeugt, anhand der eine Bedienperson einen verdächtigen Bereich im Millimeterwellen-Bild detektiert.

Da die beschriebene Vorrichtung zur Überprüfung von aufrecht stehenden Passagieren 4 dient, ist das Antennenarray 2 senkrecht stehend angeordnet. Während der Untersuchung dreht sich der Passagier 4 entsprechend dem Pfeil 7 um 360°, damit alle Seiten überprüft werden können. Bevorzugt werden aus den bei der Drehung empfangenen Werten Bilddaten für ein Video erstellt, die anschließend im Hinblick auf verdächtige Bereiche ausgewertet werden.

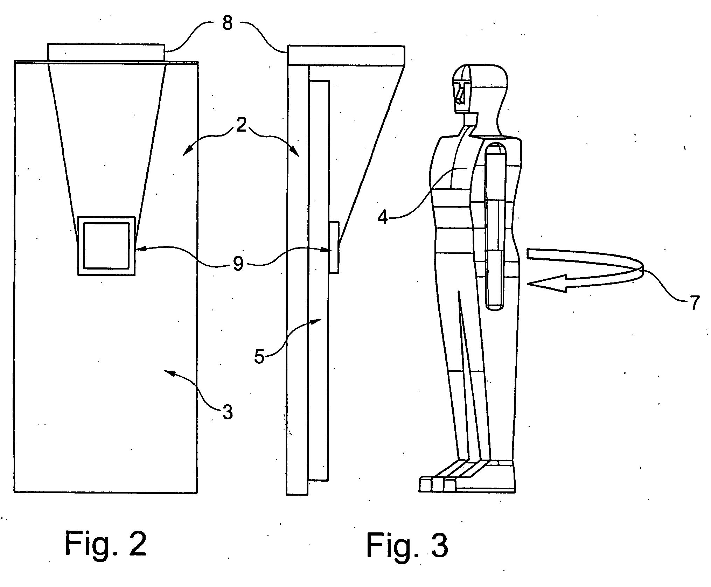

In den Figuren 2 bis 4 ist eine Vorrichtung dargestellt, die ein Markiersystem enthält, das mittels eines optischen Systems 8 eine Lichtmarkierung 9 auf die Abdeckung 5 projiziert. Das optische System 8 enthält einen Beamer oder eine ähnliche sichtbares Licht als Rahmen, Spot etc. abgebende Einrichtung zur Erzeugung einer Markierung auf der Abdeckung 5. Das optische System 8 ist dabei so gestaltet, dass die Markierung 9 auf jede Stelle der Abdeckung 5 projiziert werden kann.

Wird durch das Auswertesystem an einer bestimmten Stelle des Passagiers 4 ein verdächtiger Bereich detektiert, so projiziert das Markiersystem eine Markierung 9 auf die Abdeckung 5 an der entsprechenden Stelle im Spiegelbild des Passagiers 4. Ohne Verletzung der Intimsphäre des Passagiers 4 lässt sich so für einen Kontrolleur anzeigen, ob und wo beim Passagier 4 eine verdächtige Stelle näher zu kontrollieren ist. Sowohl der Passagier 4 als auch der hinter ihm stehende Kontrolleur sehen nur das Spiegelbild des Passagiers 4 mit der eingeblendeten Markierung. Weitere Details aus dem Millimeterwellen-Bild sind nicht sichtbar.

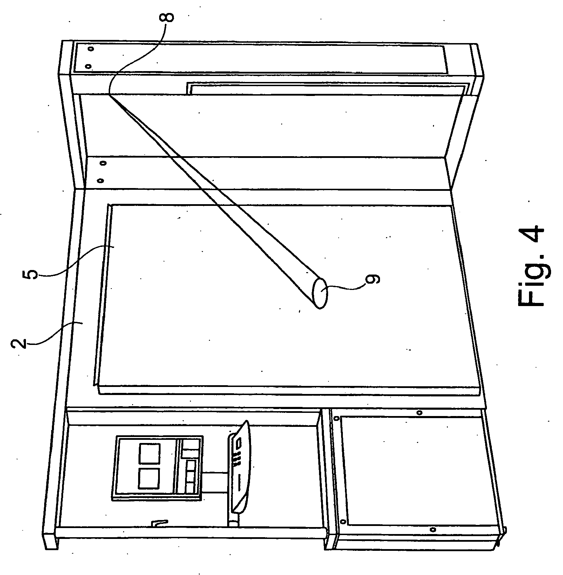

In Figur 2 ist als Markierung 9 ein aufprojizierter Rahmen dargestellt, in Figur 4 ist die aufprojizierte Markierung 9 ein Spot.

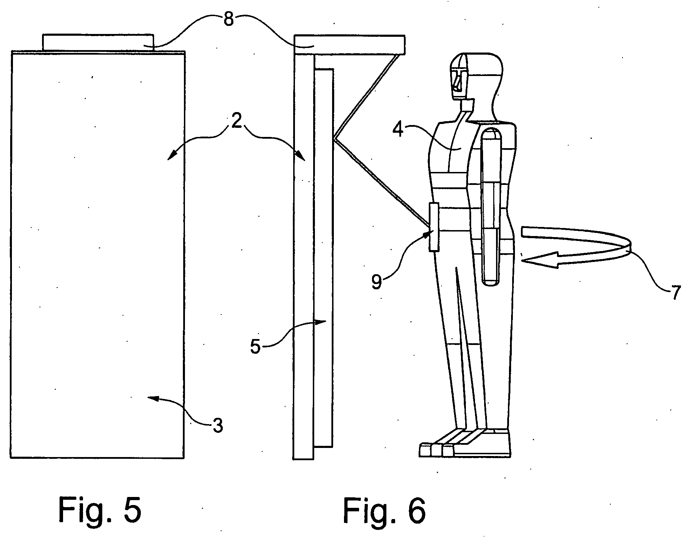

Bei der Ausführungsform nach den Figuren 5 und 6 besteht die Abdeckung 5 aus einem sichtbares Licht total reflektierenden Material.

Das Markiersystem enthält ein optisches System 8, das die Markierung 9 an die entsprechende Stelle auf dem Prüfobjekt im Beispiel auf den Passagier 4, projiziert. Der Passagier 4 und der hinter ihm stehende Kontrolleur können den Passagier 4 mit der aufprojizierten Markierung 9 selbst oder als Spiegelbild sehen. Bevorzugt wird die Markierung 9 über eine Reflexion an der Abdeckung 5 auf das zu überprüfende Objekt projiziert. Diese Ausführungsform hat den Vorteil, dass das den Passagier 4 und Markierung 4 zeigende Spiegelbild unabhängig von der Position des Kontrolleurs ohne Verzerrung betrachtet werden kann. Korrekturen zur Anpassung an die Position des Betrachters sind nicht erforderlich.

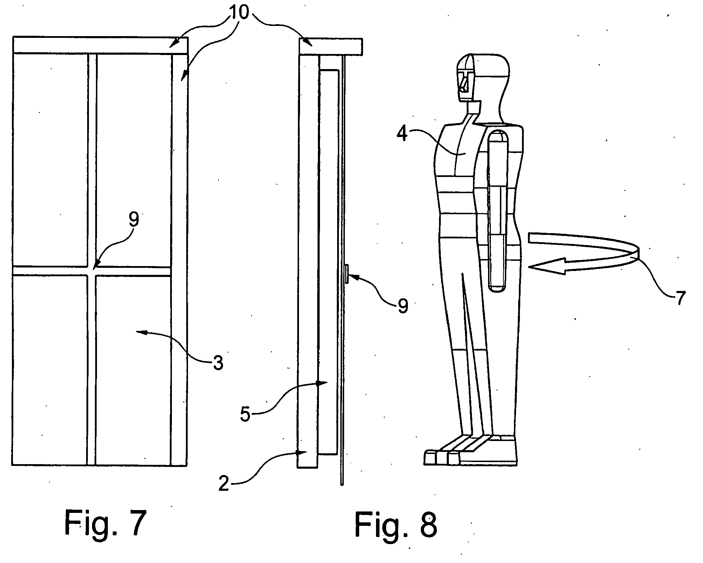

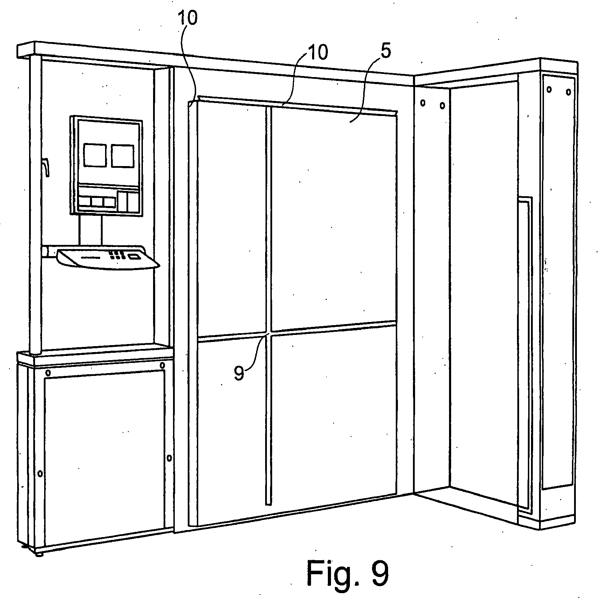

In den Figuren 7-9 ist eine Ausführungsform dargestellt, bei der die Markierung 9 auf der Abdeckung 5 durch eine Reihe von Lichtquellen 10 erzeugt, die an zumindest zwei Rändern des Arrays 2 und damit der Abdeckung 5 angeordnet sind. Die Lichtquellen 10 lassen sich einzeln ansteuern und erzeugen eingeschaltet jeweils einen Lichtstrahl, der streifend über die Abdeckung 5 fällt. Die Position eines verdächtigen Gegenstands wird als Kreuzungspunkt zwischen zumindest zwei Lichtstrahlen angezeigt, die durch Einschalten der Lichtquellen 10 an entsprechender Position erzeugt werden. Als Lichtquellen werden bevorzugt LEDs verwendet.

Bei einer weiteren, nicht in den Figuren dargestellten Ausführungsform sind im Array 2 zwischen den Antennen 3 eine Vielzahl von einzeln ansteuerbaren Lichtquellen angeordnet. Die Lichtquellen sind über das gesamte Array 2 verteilt angeordnet, bevorzugt werden LEDs eingesetzt. Die Abdeckung 5 ist teilweise für sichtbares Licht durchlässig, so dass das Licht der Lichtquellen durch die Abdeckung 5 scheint. Es lässt sich so die Position eines verdächtigen Gegenstands im Spiegelbild auf der Abdeckung 5 durch von den Lichtquellen abgegebenes und durch die Abdeckung 5 tretendes sichtbares Licht markieren. Dazu werden die an der entsprechenden Position befindlichen Lichtquellen eingeschaltet.

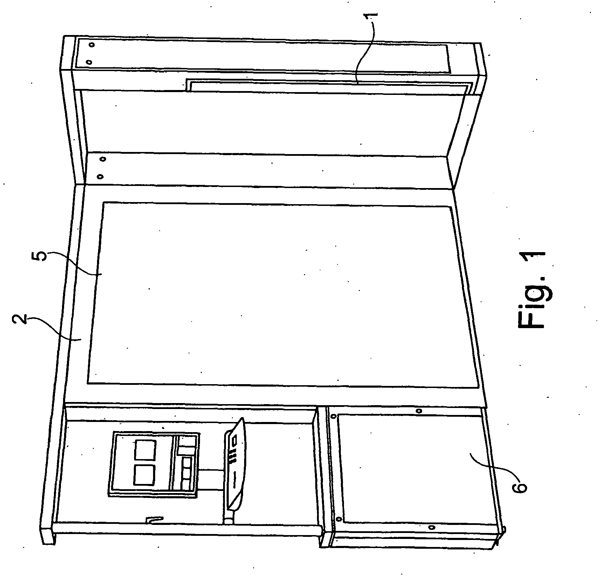

Bei einer weiteren Ausführungsform ist zumindest eine Reihe von einzeln steuerbaren Lichtquellen vorhanden, die bevorzugt senkrecht übereinander angeordnet sind. Die Reihe von Lichtquellen, bevorzugt LEDs, ist so angeordnet, dass ein Passagier neben sie treten kann. Beispielsweise können sie in einem der senkrechten Ständer des in Figur 1 rechts dargestellten Torbogens angeordnet sein. Die Höhenposition eines als verdächtig eingestuften Gegenstands wird dann an dem Passagier durch Aufleuchten der in entsprechender Höhe angeordneten Lichtquelle einem Kontrolleur angezeigt, während der Passagier neben der Reihe von Lichtquellen steht.

## Patentansprüche

1. Vorrichtung zur Überprüfung eines Objektes zur Kontrolle einer Person auf verdächtige Gegenstände, mit einem Scansystem zum Abtasten des Objekts mit Wellen und einem Auswertesystem (6),
**dadurch gekennzeichnet, dass** ein optisches Markierungssystem vorhanden ist, das die Position eines als verdächtig eingestuften Gegenstands mittels sichtbarem Licht an dem Objekt selbst oder in einem Spiegelbild des Objekts anzeigt.

2. Vorrichtung nach Patentanspruch 1, **dadurch gekennzeichnet, dass** das Scansystem eine Vielzahl von zu einem Array (2) angeordneten Antennen (3) enthält, wobei das Antennenarray (2) von einer Abdeckung (5) abgedeckt ist, die für die verwendeten Wellen durchlässig ist und zur Erzeugung eines Spiegelbilds des Objekts sichtbares Licht zumindest teilweise reflektiert, und dass das optisches Markierungssystem die Position eines als verdächtig eingestuften Gegenstands in dem auf der Abdeckung (5) erzeugten Spiegelbild des Objekts anzeigt.

3. Vorrichtung nach Anspruch 2, **dadurch gekennzeichnet, dass** ein optisches System (8) eine Lichtmarkierung auf die Abdeckung (5) projiziert.

4. Vorrichtung nach Anspruch 3, **dadurch gekennzeichnet, dass** am Rand des Arrays (2) eine Reihe von einzelnen ansteuerbaren Lichtquellen (10) angeordnet sind, die zur Markierung mittels Lichtstrahlen einer Position eines verdächtigen Gegenstands einzeln aktivierbar sind.

5. Vorrichtung nach Anspruch 2, **dadurch gekennzeichnet, dass** im Array (2) zwischen den Antennen (3) eine Vielzahl von einzeln ansteuerbaren Lichtquellen angeordnet sind, deren Licht durch die teilweise durchlässige Abdeckung (5) im Spiegelbild die Position eines verdächtigen Gegenstandes markiert.

6. Vorrichtung nach Anspruch 1, **dadurch gekennzeichnet, dass** ein optisches System (8) eine Markierung (9) auf das zu überprüfende Objekt projiziert.

7. Vorrichtung nach Anspruch 1, **dadurch gekennzeichnet, dass** das optische System eine Markierung neben dem zu überprüfenden Objekt anzeigt.

8. Vorrichtung nach einem der Ansprüche 1 bis 7, **dadurch gekennzeichnet, dass** das Scansystem zum Abtasten eines Objekts elektromagnetische Millimeterwellen verwendet.

9. Vorrichtung Anspruch 8, **dadurch gekennzeichnet, dass** das Scansystem ein Phased Array-Radarsystem mit zu einem Array (2) angeordneten Reflexionsantennen (3) ist.

10. Vorrichtung nach Anspruch 8 oder 9, **dadurch gekennzeichnet, dass** die Abdeckung (5) aus einer extrem dünnen, sichtbares Licht reflektierenden metallischen Schicht besteht, durch die Millimeterwellen dringen können.

11. Vorrichtung nach Anspruch 8 oder 9, **dadurch gekennzeichnet, dass** die Abdeckung (5) aus einem sichtbares Licht durchlässigen Material, insbesondere aus Plexiglas, ist, das für eine teilweise Reflexion mit einem dunklen Hintergrund versehen ist.

12. Vorrichtung nach einem der Ansprüche 1 bis 7, **dadurch gekennzeichnet, dass** das Scansystem zum Abtasten eines Objekts Röntgenstrahlen verwendet.

13. Vorrichtung nach einem der Ansprüche 1 bis 7, **dadurch gekennzeichnet, dass** das Scansystem zum Abtasten eines Objekts Ultraschallwellen verwendet.

14. Vorrichtung nach einem der Ansprüche 1 bis 11, **dadurch gekennzeichnet, dass** das Scansystem in einem Array (2) angeordnete Sende- und Empfangsantennen enthält.

15. Vorrichtung nach einem der Ansprüche 2 bis 12, **dadurch gekennzeichnet, dass** das Antennenarray (2) senkrecht stehend angeordnet ist.

## Claims

1. Apparatus for examining an object for checking a person for suspicious items, having a scanning system for scanning the object by way of waves and having an evaluation system (6), **characterized in that** an optical marking system is present which indicates the position of an item that has been classified as suspicious on the object itself or in a mirror image of the object using visible light.

2. Apparatus according to Patent Claim 1, **characterized in that** the scanning system contains a multiplicity of antennas (3) that are arranged in an array (2), wherein the antenna array (2) is covered by a cover (5) that is transmissive for the waves used and at least partially reflects visible light to generate a mirror image of the object, and **in that** the optical marking system indicates the position of an item that has been classified as suspicious in the mirror image of the object generated on the cover (5).

3. Apparatus according to Claim 2, **characterized in that** an optical system (8) projects a light mark onto the cover (5).

4. Apparatus according to Claim 3, **characterized in that** a series of individual driveable light sources (10) are arranged at the edge of the array (2), which light sources (10) are individually activatable for marking a position of a suspicious item by means of light beams.

5. Apparatus according to Claim 2, **characterized in that** a multiplicity of individually driveable light sources are arranged in the array (2) between the antennas (3), the light from which marks in the mirror image the position of a suspicious item through the partially transmissive cover (5).

6. Apparatus according to Claim 1, **characterized in that** an optical system (8) projects a mark (9) onto the object to be examined.

7. Apparatus according to Claim 1, **characterized in that** the optical system indicates a mark next to the object to be examined.

8. Apparatus according to one of Claims 1 to 7, **characterized in that** the scanning system uses electromagnetic millimetre waves for scanning an object.

9. Apparatus according to Claim 8, **characterized in that** the scanning system is a phased array radar system having reflection antennas (3) that are arranged to form an array (2).

10. Apparatus according to Claim 8 or 9, **characterized in that** the cover (5) consists of an extremely thin metallic layer that reflects visible light and through which millimetre waves can pass.

11. Apparatus according to Claim 8 or 9, **characterized in that** the cover (5) is of a material that is transmissive for visible light, in particular of Plexiglas, which is provided with a dark background for partial reflection.

12. Apparatus according to one of Claims 1 to 7, **characterized in that** the scanning system uses X-rays for scanning an object.

13. Apparatus according to one of Claims 1 to 7, **characterized in that** the scanning system uses ultrasound waves for scanning an object.

14. Apparatus according to one of Claims 1 to 11, **characterized in that** the scanning system includes transmitting and receiving antennas arranged in an array (2).

15. Apparatus according to one of Claims 2 to 12, **characterized in that** the antenna array (2) is arranged vertically upright.

## Revendications

1. Dispositif de vérification d'un objet servant au contrôle de la présence sur une personne d'éléments suspects, comprenant un système de balayage destiné à palper l'objet avec des ondes et un système d'interprétation (6), **caractérisé en ce qu'**il existe un système de marquage optique qui indique la position d'un élément considéré suspect à l'aide de lumière visible sur l'objet lui-même ou dans une image réfléchie de l'objet.

2. Dispositif selon la revendication 1, **caractérisé en ce que** le système de balayage contient une pluralité d'antennes (3) disposées en un réseau (2), le réseau d'antennes (2) étant recouvert par un revêtement (5) qui est transparent aux ondes utilisées et qui reflète au moins partiellement la lumière visible en vue de produire une image réfléchie de l'objet, et **en ce que** le système de marquage optique indique la position d'un élément considéré suspect dans l'image réfléchie de l'objet produite sur le revêtement (5).

3. Dispositif selon la revendication 2, **caractérisé en ce qu'**un système optique (8) projette un marquage lumineux sur le revêtement (5).

4. Dispositif selon la revendication 3, **caractérisé en ce qu'**une rangée de sources de lumière (10) pouvant être excitées individuellement est disposée sur le bord du réseau (2), lesquelles peuvent être activées pour le marquage au moyen de rayons lumineux d'une position d'un élément suspect.

5. Dispositif selon la revendication 2, **caractérisé en ce qu'**une pluralité de sources de lumière pouvant être excitées individuellement sont disposées dans le réseau (2) entre les antennes (3), dont la lumière marque la position d'un élément suspect dans l'image réfléchie à travers le revêtement (5) partiellement transparent.

6. Dispositif selon la revendication 1, **caractérisé en ce qu'**un système optique (8) projette un marquage (9) sur l'objet à vérifier.

7. Dispositif selon la revendication 1, **caractérisé en ce que** le système optique affiche un marquage à côté de l'objet à vérifier.

8. Dispositif selon l'une des revendications 1 à 7, **caractérisé en ce que** le système de balayage emploie des ondes millimétriques électromagnétiques pour le palpage d'un objet.

9. Dispositif selon la revendication 8, **caractérisé en ce que** le système de balayage est un système radar à balayage électronique pourvu d'antennes de réflexion (3) disposées en un réseau (2).

10. Dispositif selon la revendication 8 ou 9, **caractérisé en ce que** le revêtement (5) se compose d'une couche métallique extrêmement mince qui réfléchit la lumière visible, à travers laquelle peuvent pénétrer les ondes millimétriques.

11. Dispositif selon la revendication 8 ou 9, **caractérisé en ce que** le revêtement (5) se compose d'un matériau transparent à la lumière visible, notamment en plexiglas, qui est pourvu d'un arrière-plan sombre pour une réflexion partielle.

12. Dispositif selon l'une des revendications 1 à 7, **caractérisé en ce que** le système de balayage emploie des rayons X pour le palpage d'un objet.

13. Dispositif selon l'une des revendications 1 à 7, **caractérisé en ce que** le système de balayage emploie des ondes ultrasoniques pour le palpage d'un objet.

14. Dispositif selon l'une des revendications 1 à 11, **caractérisé en ce que** le système de balayage contient des antennes d'émission et de réception disposées en un réseau (2).

15. Dispositif selon l'une des revendications 2 à 12, **caractérisé en ce que** le réseau d'antennes (2) est disposé dressé en position verticale.
